# EUROPÄISCHE PATENTSCHRIFT

(11) **EP 1 385 781 B1**
(45) Veröffentlichungstag und Bekanntmachung des Hinweises auf die Patenterteilung: **07.12.2005**
(21) Anmeldenummer: 02742689.9
(22) Anmeldetag: 26.04.2002
(51) Int. Cl.: C01B 21/068

(54) **VERFAHREN ZUR HERSTELLUNG VON SILICIUMNITRID**
METHOD FOR THE PRODUCTION OF SILICON NITRIDE
PROCEDE POUR PRODUIRE DU NITRURE DE SILICIUM

(30) Priorität: 03.05.2001 DE 10121476
(43) Veröffentlichungstag der Anmeldung: 04.02.2004
(73) Patentinhaber: Wacker-Chemie GmbH, 81737 München (DE); DOW CORNING CORPORATION, Midland, Michigan 48611 (US)
(72) Erfinder: AUNER, Norbert, 60439 Frankfurt am Main (DE)
(74) Vertreter: Hauck, Graalfs, Wehnert, Döring, Siemons
(86) Internationale Anmeldenummer: PCT/DE2002/001532
(87) Internationale Veröffentlichungsnummer: WO 2002/090254

(56) Entgegenhaltungen:
- WO-A-01/98205
- PATENT ABSTRACTS OF JAPAN vol. 016, no. 369 (C-0972), 10. August 1992 (1992-08-10) & JP 04 119908 A (SHIN ETSU CHEM CO LTD), 21. April 1992 (1992-04-21)
- PATENT ABSTRACTS OF JAPAN vol. 1995, no. 07, 31. August 1995 (1995-08-31) & JP 07 109111 A (DENKI KAGAKU KOGYO KK), 25. April 1995 (1995-04-25)

## Beschreibung

Die vorliegende Erfindung betrifft ein Verfahren zur Herstellung von Siliciumnitrid (Si₃N₄).

Wegen seiner Temperatur-Wechselbeständigkeit, Festigkeit und Korrosionsbeständigkeit findet Siliciumnitrid für eine Vielzahl von Anwendungsfällen Verwendung, beispielsweise als Harstoff für Maschinenteile, Kraftfahrzeugmotoren, Turbinenteile etc. Es ist bekannt, Siliciumnitrid durch Erhitzen von Siliciumpulver auf 1.250-1.450 °C in einer Stickstoff-Atmosphäre herzustellen. Als Endprodukt wird dabei Siliciumnitrid in Pulverform gewonnen. Die Verdichtung und Sinterung des Pulvers zu fertigen Keramikteilen kann durch Heißpressen erreicht werden (Römpp*,*chemie Lexikon, 9. Anflage, 5.4167).

Das vorstehend aufgeführte Herstellungsverfahren hat den Nachteil, daß für die Reaktion des Siliciums mit Stickstoff relativ hohe Temperaturen (1.250-1.450 °C) benötigt werden, so daß für das Verfahren ein hoher Energieaufwand benötigt wird.

Aus PATENT ABSTRACTS OF JAPAN Bd. 016, Nr. 369 (C-0972, 10. August 1992 (1992-08-10) & JP 04 119908 A (SHIN ETSU CHEM CO LTD), 21. April 1992 (1992-04-21) ist ein Verfahren zur Herstellung von Siliciumnitrid (Si₃N₄) bekannt, bei dem ein Gemisch aus Silicium und einem Element (Al) oder einer chemischen Verbindung (Al₂O₃) erhitzt wird. Die Reaktion wird hierbei in einer Stickstoff/Wasserstoff-Atmosphäre durchgeführt.

Der Erfindung liegt die Aufgabe zugrunde, ein Verfahren zur Herstellung von Siliciumnitrid zur Verfügung zu stellen, das mit einem geringen Energieaufwand durchgeführt werden kann.

Diese Aufgabe wird erfindungsgemäß durch ein Verfahren gelöst, das die folgenden Schritte umfaßt:
a. Herstellen eines Gemisches oder einer Legierung aus Silicium und einem chemischen Element oder einer chemischen Verbindung, das oder die mit dem Sauerstoff der Luft schneller als oder gleich schnell wie Silicium reagiert;
b. Bringen des Gemisches oder der Legierung auf die Zündtemperatur des chemischen Elementes oder der chemischen Verbindung und Beaufschlagen des Gemisches oder der Legierung mit Luft;
c. Oxidieren des chemischen Elementes oder der chemischen Verbindung des Gemisches oder der Legierung mit dem Sauerstoff der Luft; und
d. Verbrennen des Siliciums des Gemisches oder der Legierung mit dem verbleibenden Stickstoff der Luft bei den durch die Oxidation erzeugten erhöhten Temperaturen zu Siliciumnitrid.

Es hat sich überraschenderweise gezeigt, daß die für das Verbrennen des Siliciums mit Stickstoff erforderliche Reaktionstemperatur (Zündtemperatur) durch Reaktion eines chemischen Elementes oder einer chemischen Verbindung, die mit dem Sauerstoff der Luft schneller als oder gleich schnell wie Silicium reagiert, erzeugt werden kann. Um die durch diese Oxidationsreaktion erzeugte Energie zum Initiieren der Reaktion des Siliciums mit dem Stickstoff zu nutzen, wird erfindungsgemäß ein Gemisch oder eine Legierung aus Silicium und diesem chemischen Element oder dieser chemischen Verbindung hergestellt. Dieses Gemisch oder diese Legierung wird auf die Zündtemperatur des chemischen Elementes oder der chemischen Verbindung gebracht. Da das chemische Element oder die chemische Verbindung schneller mit dem Sauerstoff der Luft reagiert als Silicium (allenfalls gleich schnell) findet bei zugeführter Luft eine Reaktion des chemischen Elementes oder der chemischen Verbindung mit dem Sauerstoff statt, wodurch die Reaktionstemperatur erzeugt wird, bei der Silicium dann mit dem verbleibenden Stickstoff der Luft verbrennt. Durch.die Oxidation des chemischen Elementes oder der chemischen Verbindung wird darüber hinaus der Sauerstoffanteil der Luft entfernt, so daß eine Reaktion des Siliciums mit Sauerstoff ausgeschlossen wird.

Bei dem erfindungsgemäßen Verfahren finden daher zwei Reaktionsschritte statt: als erstes eine Oxidationsreaktion des Luftsauerstoffes mit dem chemischen Element oder der chemischen Verbindung, der bzw. die dem Silicium zugesetzt wird, und als zweites die eigentliche Hauptreaktion des Siliciums mit dem verbleibenden Stickstoff der Luft. Durch die vorgeschaltete Oxidationsreaktion wird einerseits die für die Reaktion des Stickstoffes mit dem Silicium benötigte Reaktionstemperatur erzeugt, andererseits der Sauerstoffanteil der Luft entfernt, so daß eine unerwünschte Umsetzung des Siliciums zu Siliciumdioxid vermieden wird.

Der vorstehend geschilderte Reaktionsablauf ist nur möglich, wenn das chemische Element oder die chemische Verbindung mit dem Sauerstoff der Luft schneller als oder gleich schnell wie Silicium reagiert, da anderenfalls eine Oxidationsreaktion des Siliciums bevorzugt ablaufen würde. Der gemischte Einsatz des chemischen Elementes oder der chemischen Verbindung und von Silicium ist aber auch dann nicht problematisch, wenn Silicium annähernd gleich schnell mit Sauerstoff reagiert oder der Einsatz dieses chemischen Elementes oder dieser chemischen Verbindung für die Reaktion des Siliciums eigentlich nicht notwendig wäre, da das chemische Element oder die chemische Verbindung bei hohen Temperaturen ebenfalls mit Stickstoff zum Nitrid umgesetzt wird, das entweder als solches genutzt oder beispielsweise mit Wasser zu Ammoniak umgesetzt werden kann und somit ebenfalls ein wünschenswertes Endprodukt darstellt.

Vorzugsweise wird ein chemisches Element oder eine chemische Verbindung verwendet, deren Schmelzpunkt niedriger ist als der von Silicium. Bei dieser Ausführungsform des erfindungsgemäßen Verfahrens wird aus dem chemischen Element oder der chemischen Verbindung eine Schmelze erzeugt, in die Silicium eingebettet wird. Dabei wird das Silicium vorzugsweise in Pulverform in die Schmelze eingebettet. Aus der Schmelze mit dem eingebetteten Silicium können dann beispielsweise Drähte, Stäbe, Blöcke u.dgl. hergestellt werden, die für das erfindungsgemäße Verfahren eingesetzt, d.h. mit dem Sauerstoff der Luft zur Reaktion gebracht werden.

Bei der vorstehend geschilderten Ausführungsform des erfindungsgemäßen Verfahrens kann daher das chemische Element oder die chemische Verbindung in, abhängig von der Sprödigkeit des Produktes, relativ geringem Anteil zusammen mit Siliciumpulver vorzugsweise zu Drähten geformt werden, in denen reines Silicium in einem Trägermedium aus dem reinen chemischen Element oder der reinen chemischen Verbindung vorliegt.

Als chemisches Element oder chemische Verbindung für das erfindungsgemäße Verfahren wird vorzugsweise ein Metall verwendet, wobei Aluminium (A1) besonders bevorzugt verwendet wird. Aluminium schmilzt bei 660 °C und hat somit einen deutlich niedrigeren Schmelzpunkt als Silicium (1.410 °C). Wenn bei der Temperatur des flüssigen Aluminiums eine Legierungsbildung mit Silicium unterdrückt wird, kann Siliciumpulver in flüssiges Aluminium eingearbeitet werden, wobei reines metallisches Aluminium das Trägermedium für Silicium (Siliciumpulver) bildet. Die durch die Mischung beider Metalle erfolgte Schmelzpunkterniedrigung bringt darüber hinaus Vorteile beim Aufschmelzen vor der Verbrennung des Gemisches mit sich.

Natürlich können auch vergleichbare Al/Si-Legierungen (mit ähnlichen Verarbeitungseigenschaften) für das erfindungsgemäße Verfahren eingesetzt werden.

Das vorzugsweise verwendete Aluminium reagiert bereits bei wenigen Prozent Sauerstoffanteil im Stickstoffstrom (3,2 %, Reaktionstemperatur 750 °C) fast ausschließlich zum Oxid. Die Reaktion von Sauerstoff mit Aluminium läuft daher deutlich schneller ab als die mit Silicium, so daß die gewünschte Reaktionstemperatur für die Reaktion des Siliciums mit Stickstoff erzeugt und der Sauerstoffanteil der Luft entfernt wird.

Mit dem erfindungsgemäß durchgeführten Verfahren wird eine sonst eventuell notwendige Verbrennung des Sauerstoffes der Luft mit Wasserstoff ersetzt, sollte bei der Verbrennung von Silicium mit Stickstoff der entsprechende Luftsauerstoffanteil stören. Auf diese Weise kann auch eine Kontamination des Brenngases mit Wasserdampf umgangen werden, welcher möglicherweise unter Brennkammerbedingungen ebenfalls mit Silicium reagiert.

Bei dem erfindungsgemäßen Verfahren fallen als Endprodukte Siliciumnitrid und das vom chemischen Element oder der chemischen Verbindung gebildete Oxid, möglicherweise auch ein vom chemischen Element oder der chemischen Verbindung gebildetes Nitrid, an. Die erhaltenen Verbrennungsprodukte werden vorzugsweise einer Trennstufe zugeführt, um das aus dem chemischen Element oder der chemischen Verbindung gebildete Oxid (Nitrid) vom Siliciumnitrid zu trennen. Die abgetrennten Oxide bzw. Nitride (vorzugsweise Aluminiumoxid und Aluminiumnitrid) werden einer weiteren Verwendung zugeführt.

Bei Verwendung eines Gemisches aus Silicium und einem chemischen Element oder einer chemischen Verbindung zur Durchführung des erfindungsgemäßen Verfahrens wird eine Legierungsbildung zwischen dem chemischen Element oder der chemischen Verbindung und Silicium verhindert, um ein bevorzugtes Ablaufen der gewünschten Oxidationsreaktion zu erreichen.

Die Verbrennung des Siliciums mit dem Stickstoff der Luft läuft, nachdem einmal die gewünschte Reaktionstemperatur erreicht ist, exotherm ab, wobei Energie erzeugt wird. Diese Energie wird vorzugsweise genutzt, beispielsweise zum Antreiben von Turbinen. Ein aus einer Reaktionskammer, in der das erfindungsgemäße Verfahren durchgeführt wird, austretender, die entstehenden Verbrennungsprodukte (Siliciumnitrid und das Oxid und ggf. Nitrid des chemischen Elementes oder der chemischen Verbindung) enthaltender heißer Gasstrom wird dann zur Beaufschlagung von entsprechenden Antriebsaggregaten (Turbinen, Motoren etc.) eingesetzt.

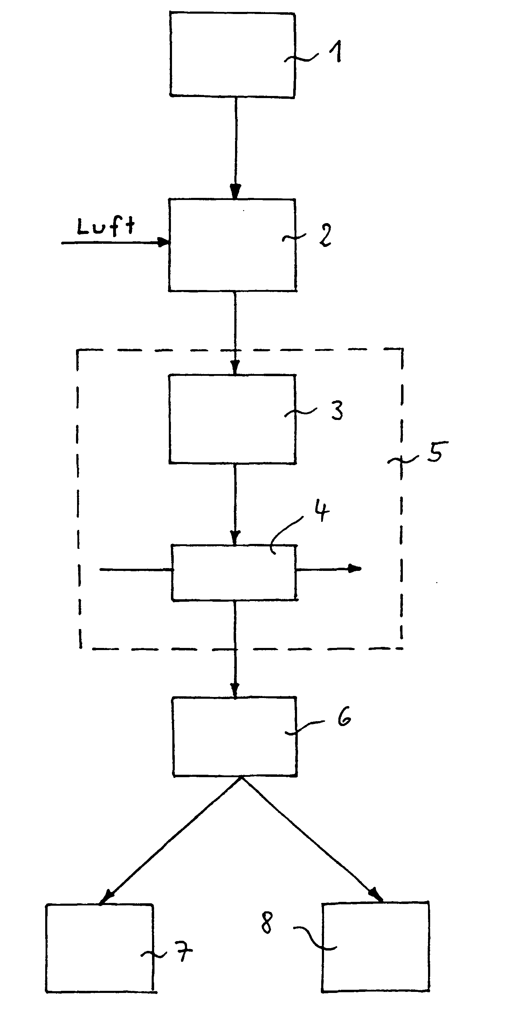

Das erfindungsgemäße Verfahren wird nachfolgend anhand eines Ablaufdiagrammes im einzelnen erläutert. Dieses Ablaufdiagramm ist in der einzigen Figur dargestellt.

Eine für das erfindungsgemäße Verfahren verwendete Brennstoffquelle 1 umfaßt einen Vorrat an Silicium-Aluminium-Draht. Dieser Draht besteht aus einem Trägermedium aus Aluminium, in das feines Siliciumpulver eingebettet ist.

Der Draht wird in eine Brennkammer 2 eingeführt, die mit einer für die durchzuführenden Reaktionen geeigneten Auskleidung versehen ist. In die Brennkammer 2 wird Luft eingeblasen. Die Brennkammer wird dann auf eine Temperatur gebracht, die der Zündtemperatur des Auluminiums im Aluminiumdraht entspricht. Es setzt dann eine Reaktion des Aluminiums mit dem Sauerstoffanteil der Luft ein, wobei Aluminiumoxid (Al₂O₃) gebildet wird. Durch diese Reaktion wird der Sauerstoff der Luft verbraucht und die Temperatur der Brennkammer auf die Reaktionstemperatur des Siliciumpulvers im Draht mit dem Stickstoffanteil der Luft gebracht. Das Silicium reagiert dann mit dem Stickstoff der Luft, wobei diese Reaktion exotherm abläuft. Der die Verbrennungsprodukte Siliciumnitrid (Si₃N₄) und Aluminiumoxid (Al₂O₃) (möglicherweise auch AlN) enthaltende heiße Gasstrom verläßt die Brennkammer 2 und wird in eine Turbine 3 geführt, um dort das Turbinenlaufrad zu beaufschlagen. Von dort gelangt der immer noch relativ heiße Gasstrom zu einem wärmetauscher 4, um seine Restwärme abzugeben. Die Turbine 3 und der Wärmetauscher 4 bilden Teile einer Energieerzeugungseinheit 5. Naturgemäß kann eine solche Einheit auch anders ausgebildet sein.

Der abgekühlte, die Verbrennungsprodukte enthaltende Gasstrom wird dann einer Trennstufe 6 zugeführt, um das Aluminiumoxid bzw. Aluminiumnitrid vom Siliciumnitrid zu trennen. Aluminiumoxid bzw. Aluminiumnitrid wird dann bei 7 gespeichert, um einer weiteren Verwendung zugeführt zu werden, beispielsweise durch Umsetzung mit Wasser zur Ammoniakherstellung. Das gewonnene Siliciumnitrid wird bei 8 gespeichert. Es kann als solches verwendet werden, beispielsweise als Harstoff, Keramik etc., oder ebenfalls mit Wasser zu Ammoniak und Siliciumdioxid umgesetzt werden.

wenn für das erfindungsgemäße Verfahren eine Legierung zwischen Silicium und dem chemischen Element oder der chemischen Verbindung Verwendung findet, so kann diese in einem direkten karbothermischen Reduktionsprozeß für Silicium hergestellt werden, beispielsweise aus Al₂O₃ und SiO₂.

## Patentansprüche

1. Verfahren zur Herstellung von Siliciumnitrid (Si₃N₄) mit den folgenden Schritten:
a. Herstellen eines Gemisches oder einer Legierung aus Silicium und einem chemischen Element oder einer chemischen Verbindung, das oder die mit dem Sauerstoff der Luft schneller als oder gleich schnell wie Silicium reagiert;
b. Bringen des Gemisches oder der Legierung auf die Zündtemperatur des chemischen Elementes oder der chemischen Verbindung und Beaufschlagen des Gemisches oder der Legierung mit Luft;
c. Oxidieren des chemischen Elementes oder der chemischen Verbindung des Gemisches oder der Legierung mit dem Sauerstoff der Luft; und
d. Verbrennen des Siliciums des Gemisches oder der Legierung mit dem verbleibenden Stickstoff der Luft bei den durch die Oxidation erzeugten erhöhten Temperaturen zu Siliciumnitrid.

2. Verfahren nach Anspruch 1, **dadurch gekennzeichnet, daß** ein chemisches Element oder eine chemische Verbindung verwendet wird, deren Schmelzpunkt niedriger ist als der von Silicium.

3. Verfahren nach Anspruch 2, **dadurch gekennzeichnet, daß** aus dem chemischen Element oder der chemischen Verbindung eine Schmelze erzeugt wird, in die Silicium eingebettet wird.

4. Verfahren nach Anspruch 3, **dadurch gekennzeichnet, daß** Silicium in Pulverform in die Schmelze eingebettet wird.

5. verfahren nach Anspruch 3 oder 4, **dadurch gekennzeichnet, daß** aus der Schmelze mit dem eingebetteten Silicium Drähte, Stäbe, Blöcke u.dgl. hergestellt werden.

6. Verfahren nach Anspruch 5, **dadurch gekennzeichnet, daß** die Drähte, Stäbe, Blöcke u.dgl. mit dem Sauerstoff der Luft zur Reaktion gebracht werden.

7. Verfahren nach einem der vorangehenden Ansprüche, **dadurch gekennzeichnet, daß** als chemisches Element oder chemische Verbindung ein Metall, insbesondere Aluminium (Al), verwendet wird.

8. Verfahren nach einem der vorangehenden Ansprüche, **dadurch gekennzeichnet, daß** bei Verwendung eines Gemisches eine Legierungsbildung zwischen dem chemischen Element oder der chemischen Verbindung und Silicium verhindert wird.

9. Verfahren nach einem der vorangehenden Ansprüche, **dadurch gekennzeichnet, daß** der nicht mit dem Sauerstoff der Luft oxidierte Teil des chemischen Elementes oder der chemischen Verbindung bei den erhöhten Temperaturen mit Stickstoff ebenfalls zum Nitrid umgesetzt wird.

10. Verfahren nach einem der vorangehenden Ansprüche, **dadurch gekennzeichnet, daß** die Verbrennung des Siliciums mit dem Stickstoff zur Energiegewinnung genutzt wird.

11. Verfahren nach einem der vorangehenden Ansprüche, **dadurch gekennzeichnet, daß** die erhaltenen Verbrennungsprodukte einer Trennstufe zugeführt werden, um das aus dem chemischen Element oder der chemischen Verbindung gebildete Oxid (Nitrid) vom Silciumnitrid zu trennen.

## Claims

1. A method of producing silicon nitride (Si₃N₄) comprising the following steps:
a. Producing a mixture or an alloy of silicon and a chemical element or a chemical compound which reacts with the oxygen of the air more quickly than or as quickly as silicon;
b. Bringing the mixture or the alloy to the ignition temperature of the chemical element or the chemical compound and applying air to the mixture or the alloy;
c. Oxydizing the chemical element or the chemical compound of the mixture or the alloy with the oxygen of the air; and
d. Combusting the silicon or the mixture or the alloy with the remaining nitrogen of the air to obtain silicon nitride at the raised temperatures generated by the oxydation.

2. The method according to claim 1, **characterized in that** a chemical element or a chemical compound is used the melting point of which is lower than that of silicon.

3. The method according to claim 2, **characterized in that** a melt is generated from the chemical element or the chemical compound into which silicon is embedded.

4. The method according to claim 2, **characterized in that** silicon is embedded into the melt in powder form.

5. The method according to claim 3 or 4, **characterized in that** wires, rods, blocks etc. are produced from the melt with the embedded silicon.

6. The method according to claim 5, **characterized in that** the wires, rods, blocks etc. are reacted with the oxygen of the air.

7. The method according to one of the preceding claims, **characterized in that** a metal, especially aluminum (Al), is used as chemical element or chemical compound.

8. The method according to one of the preceding claims, **characterized in that**, when using a mixture, the generation of an alloy between the chemical element or the chemical compound and silicon is prevented.

9. The method according to one of the preceding claims, **characterized in that** the portion of the chemical element or the chemical compound which did not react with the oxygen of the air is also reacted to the nitride with nitrogen at the raised temperatures.

10. The method according to one of the preceding claims, **characterized in that** the combustion of the silicon with the nitrogen is used for the generation of energy.

11. The method according to one of the preceding claims, **characterized in that** the obtained combustion products are fed to a separation step in order to separate the oxide (nitride) generated from the chemical element or the chemical compound from the silicon nitride.

## Revendications

1. Procédé pour la préparation de nitrure de silicium (Si₃N₄), comprenant les étapes suivantes :
a. Préparation d'un mélange ou d'un alliage de silicium et d'un élément chimique ou d'un composé chimique, qui réagit plus vite ou aussi vite que le silicium avec l'oxygène de l'air,
b. Portée du mélange ou de l'alliage à la température d'inflammation de l'élément chimique ou du composé chimique et apport d'air au mélange ou à l'alliage,
c. Oxydation de l'élément chimique ou du composé chimique du mélange ou de l'alliage par l'oxygène de l'air, et
d. Combustion du silicium du mélange ou de l'alliage avec l'azote de l'air restant à la haute température produite par l'oxydation, pour former du nitrure de silicium.

2. Procédé selon là revendication 1, **caractérisé en ce que** l'on utilise un élément chimique ou un composé chimique dont le point de fusion est inférieur à celui du silicium.

3. Procédé selon la revendication 2, **caractérisé en ce que** l'on produit à partir de l'élément chimique ou du composé chimique une masse fondue dans laquelle est noyé le silicium.

4. Procédé selon la revendication 3, **caractérisé en ce que** le silicium est noyé sous forme de poudre dans la masse fondue.

5. Procédé selon la revendication 3 ou 4, **caractérisé en ce que** l'on prépare à partir de la masse fondue contenant le silicium noyé des fils, des barres, des blocs et similaires.

6. Procédé selon la revendication 5, **caractérisé en ce que** les fils, barres, blocs et similaires sont mis à réagir avec l'oxygène de l'air.

7. Procédé selon l'une quelconque des revendications qui précèdent, **caractérisé en ce que** l'on utilise comme éléments chimique ou comme composé chimique un métal, en particulier de l'aluminium (Al).

8. Procédé selon l'une quelconque des revendications qui précèdent, **caractérisé en ce que**, lorsque l'on utilise un mélange, une formation d'alliage entre l'élément chimique ou le composé chimique est empêchée.

9. Procédé selon l'une quelconque des revendications qui précèdent, **caractérisé en ce que** la partie de l'élément chimique ou du composé chimique qui n'est pas oxydée par l'oxygène de l'air est également convertie en nitrure par l'azote à la haute température.

10. Procédé selon l'une quelconque des revendications qui précèdent, **caractérisé en ce que** la combustion du silicium par l'azote est exploitée aux fins de récupération d'énergie.

11. Procédé selon l'une quelconque des revendications qui précèdent, **caractérisé en ce que** les produits de combustion obtenus sont envoyés à une étape de séparation, afin de séparer l'oxyde (nitrure) formé à partir de l'élément chimique ou du composé chimique et le nitrure de silicium.
